# EUROPÄISCHE PATENTSCHRIFT

(11) **EP 2 512 903 B1**
(45) Veröffentlichungstag und Bekanntmachung des Hinweises auf die Patenterteilung: **30.10.2013**
(21) Anmeldenummer: 10742123.2
(22) Anmeldetag: 30.07.2010
(51) Int. Cl.: B62D 29/00

(54) **VERBUNDBAUTEIL**
COMPOSITE COMPONENT
ELÉMENT COMPOSITE

(30) Priorität: 18.12.2009 DE 102009054999
(43) Veröffentlichungstag der Anmeldung: 24.10.2012
(73) Patentinhaber: Henkel AG & Co. KGaA, 40589 Düsseldorf (DE)
(72) Erfinder: WESCH, Karl, 69429 Waldbrunn (DE); SCHILLING, Jochen, 69181 Leimen (DE)
(86) Internationale Anmeldenummer: PCT/EP2010/061083
(87) Internationale Veröffentlichungsnummer: WO 2011/072889

(56) Entgegenhaltungen:
- EP-A2- 1 084 816
- EP-A2- 1 306 292
- WO-A1-2005/035339
- DE-T2- 69 533 457
- DE-U1- 20 013 208
- US-A1- 2008 317 988

## Beschreibung

Die Erfindung bezieht sich auf ein Verbundbauteil bestehend aus einer einen Raum zumindest bereichsweise umgrenzenden Schale und einem Strukturbauteil mit Strukturmaterial, welches zumindest bereichsweise zwischen der Schale und dem Strukturbauteil vorgesehen ist.

Einsatzgebiete eines derartigen Verbundbauteils finden sich insbesondere im Fahrzeugbereich. Dabei ist die zum Einsatz kommende Schale beispielsweise ein Schweller, eine A-, B-, C- Säule, ein Querlenker, ein Achsschenkel oder ein andere zumindest bereichsweise rinnenoder schalenförmiges Bauteil sein, welches mittels eines Strukturbauteils und eines Strukturmaterials insbesondere verstärkt wird.

Ein Bauteil der Eingangs genannten Art wird in der DE 69533457 T2 offenbart einen Verbundbauteil umfassend ein als C-Schiene ausgestaltetes äußeres Strukturteil mit einer äußeren Wandfläche und einer inneren Wandfläche, einen inneren Verstärkungsteil mit im wesentlichten der gleichen Form wie das äußere Strukturteil, mit einer äußeren Wandfläche und einer inneren Wandfläche, wobei die genannte innere Wandfläche des genannten inneren Verstärkungsteil einen Hohlraum begrenzt in dem eine auf Harz basierende Materialschicht vorgesehen ist, wobei die äußere Wandfläche des genannten inneren Verstärkungsteil an die innere Wandfläche des genannten Strukturteils durch die genannte auf Harz basierende Materialschicht gebunden ist.

Ein weiteres Bauteil wird auch in der EP1306292A2 offenbart, wobei hier ein schalenförmiger, Metall umfassender Grundkörper vorgesehen ist, in dessen Innenraum Verstärkungsrippen aus angespritztem Kunststoff angeordnet sind, wobei der Grundkörper an seiner Innenwand wenigstens eine Ausnehmung aufweist, die mit dem Kunststoff für die Verstärkungsrippen gefüllt ist. Um das Trägerbauteil bei geringem Gewicht mit genügend hoher Festigkeit auszustatten, ist der Grundkörper aus mehreren Schichten hergestellt, von denen zumindest zwei Metallschichten sind, die zwischen sich eine Kunststoffschicht aufnehmen, wobei die Ausnehmung wenigstens die die Innenwand bildende Metallschicht durchsetzt

Insbesondere zur Kosten- und Gewichtsreduktion wird versucht, derartige Strukturteile, welche meist aus metallischen Werkstoffen bestehen, mit möglichst geringem Materialaufwand herzustellen. Jedoch kann diese Materialersparnis zu einer verminderten Festigkeit des Verbundbauteiles führen.

Aufgabe der Erfindung ist es daher, eine verbessertes Verbundbauteil bestehend aus zumindest einer Schale, einem Strukturbauteil zur Verstärkung der Schale sowie einem Strukturmaterial bereitzustellen.

Diese Aufgabe wird durch die Merkmale des Anspruchs 1 gelöst.

Die vorteilhaften Ausgestaltungen der Erfindung sind mit den Unteransprüchen angegeben.

Der Grundgedanke der Erfindung ist der Einsatz eines Verbundbauteils mit einer einen Raum zumindest bereichsweise umgrenzenden Schale und mit einem Strukturbauteil zur Verstärkung der Schale, wobei das Strukturbauteil zumindest bereichsweise von einer den Raum bestimmenden Wand der Schale beabstandet angeordnet ist, wobei zumindest bereichsweise ein Strukturmaterial zwischen der Wand der Schale und dem Strukturbauteil vorgesehen ist,wobei die Schale zumindest eine freie Kante aufweist, über die sich das Strukturbauteil mindestens bereichsweise erstreckt, wobei sich das Strukturbauteil umgreifend über die freie Kante der Schale erstreckt, um diese zumindest bereichsweise vollständig abzudecken und wobei der umgreifende Bereich des Strukturbauteils zumindest bereichsweise beabstandet von der freien Kante angeordnet ist, wobei zumindest bereichsweise ein Strukturmaterial zwischen dem Strukturbauteil und der freien Kante vorgesehen ist.

Die Schale kann dabei ein beliebiges Bauteil beispielsweise eines Fahrzeugs sein, insbesondere eine A-, B- oder C-Säule, ein Achsschenkel, ein Windschutzscheibenrahmen oder ein Schweller. Selbige Schale umgrenzt zumindest bereichsweise einen Raum. Dabei ist unter einem Raum bspw. bei einer als rinnenförmiges Bauteil mit einer U-förmigen Schnittansicht ausgestalteten Schale der Bereich anzusehen, welcher in der Schnittansicht von der U-Form des Bauteils begrenzt wird. Die Schale kann aber auch mit beispielsweise eine L-Profil aufweisen oder lediglich ein flächiges Bauteil darstellen, welches mit seiner Fläche als Wand einen Raum oberhalb oder unterhalb begrenzt

Vorzugsweise ist das Strukturbauteil zumindest bereichsweise in dem Raum angeordnet und steht derart zumindest einer Wand oder einem Abschnitt der Schale in Kontakt, so dass eine Verstärkung der Schale über das Strukturbauteil ermöglicht werden kann. Vorzugsweise ist das Strukturbauteil dabei zumindest bereichsweise von einer den Raum bestimmenden Wand der Schale derart beabstandet angeordnet, dass zwischen beiden Bauteilen das Strukturmaterial vorgesehen werden kann, insbesondere um eine Verbindung und/oder eine Kraftübertragungsmöglichkeit zwischen der Schale und dem Strukturbauteil bereitzustellen.

In der Regel weisen derartige Schalen freie Kanten auf. Unter einer freien Kante ist im Sinne der vorliegenden Erfindung einerseits ein Endabschnitt einer Wand der Schale, der durch eine Kante bestimmt wird zu verstehen, andererseits jedoch auch ein Kantenbereich, der auch flächig gestaltet sein kann, im Sinne eines Abschnitts oder Bereichs der Schale, der von einem den Raum bereichsweise bestimmenden Abschnitt vorsteht.

Bei der vorliegenden Erfindung ist das Strukturbauteil derart gestaltet, dass es sich zumindest bereichsweise über eine freie Kante der Schale erstreckt. Durch diese Erstreckung des Strukturbauteils über die freie Kante kann beispielsweise aufgrund der Erhöhung der Kontaktfläche zwischen Strukturbauteil und Schale die Verstärkung und insbesondere eine Versteifungsleistung des Strukturbauteils für die Schale erhöht werden. Insbesondere kann der gegenständliche Bereich zwischen Strukturbauteil und Schale im bereich der freien Kante mit einem Strukturmaterial versehen werden, was das Strukturbauteil in diesem Bereich an der Schale fixiert. Dabei muss sich die Abdeckung nicht über die gesamte Kante erstrecken, sondern kann derart ausgelegt und angeordnet sein, dass sie in Bereichen in denen große Kräfte von der Schale auf das Strukturbauteil übertragen werden, vorgesehen oder sogar mit verstärkter Wandstärke des Strukturbauteils vorgesehen ist und in Bereichen in denen keine oder eine geringe Kraftübertragung zu erwarten ist, keine Abdeckung vorgesehen bzw. lediglich eine Abdeckung mit einer geringeren Wandstärke des Strukturbauteils vorgesehen ist.

Ein weiter Vorteil ist die Bereitstellung eines Schutzes der Kanten der Schale durch Abdeckung durch das Strukturbauteil. Meist werden insbesondere im Fahrzeugbau zum Einsatz kommende Schalen aus einem metallischen Werkstoff gefertigt. Zwar können die zum Einsatz kommenden Werkstoffe oft einer korrosionsschützenden Behandlung unterzogen worden sein, jedoch sind die Kanten durch Bearbeitungsschritte oft nicht mehr geschützt und sind äußeren Einflüssen ausgeliefert. Mittels Bereitstellung einer Abdeckungsmöglichkeit der Kanten durch das Strukturbauteil kann insbesondere die Korrosion der Schalen verhindert und so eine Schutzmöglichkeit für die Schale bereitgestellt werden. Auch hier kann die Abdeckung durch das Strukturbauteil wie oben beschrieben entsprechend der einwirkenden Einflüsse und Belastungen ausgelegt werden. So kann sich an direkt durch bspw. Spritz- oder Stauwasser beaufschlagten Kanten eine vollständige Abdeckung eignen, an verdeckt angeordneten Kanten kann möglicherweise eine geringfügigere oder gar keine Abdeckung von Nöten sein. Bevorzugt ist im Bereich der Abdeckung zwischen dem Strukturbauteil und der Schale ein Strukturmaterial vorgesehen, welches den Freiraum zwischen beiden Bauteilen vorzugsweise vollständig ausfüllt, so dass eine dichte Abdeckung bereitgestellt werden kann, um die Schutzmöglichkeit für die Kante weiter zu verbessern.

Da insbesondere tragende Bauteile bei Fahrzeugen oftmals große Kräfte aufnehmen müssen und zudem unterschiedlichsten Witterungseinflüssen ausgesetzt sind, wird vorzugsweise eine Kombination der oben genannten Vorteile gewählt. Bevorzugt wird das Strukturbauteil also derart ausgelegt, dass mittels des Strukturbauteils die Kanten derart abgedeckt werden, dass hierdurch einerseits die oben beschriebene Versteifungs- und/oder Verstärkungsleistung des Strukturbauteils für die Schale bereitgestellt werden kann, um ein verstärktes Verbundelement zu erhalten. Andererseits die Abdeckung derart vorgesehen wird, dass insbesondere für äußere Einflüsse belastete Kanten eine Schutzmöglichkeit bereitgestellt werden kann, beispielsweise um ein korrosionsbeständigeres Verbundbauteil zu erhalten. So kann bei Außenanwendungen wie z.B. Achsträgern, Querlenkern oder anderen Anbauteilen im Fahrzeugbau auch der Einfluß der Alterung durch Umweltbedingungen reduziert werden.

Erfindungsgemäß erstreckt sich das Strukturbauteil umgreifend über die freie Kante der Schale, um diese zumindest bereichsweise vollständig abzudecken. Mittels des Umgriffs kann zum einen eine besonders gute Schutzmöglichkeit der Kante durch das Strukturbauteil bereitgestellt werden. Zum anderen kann durch den Umgriff die Versteifungsleistung des Strukturbauteils weiter erhöht werden. Das Strukturbauteil ist dabei vorzugsweise derart gestaltet, dass die Kanten der Seitenwände der Schale über den Umgriff des Strukturbauteils überdeckt werden. Dabei kann es sich als sinnvoll erweisen, dass sich der umgreifende Bereich des Strukturbauteils die gesamte Höhe einer Wand, also einer Seitenflanke der Schale sowohl innen als auch außen im Wesentlichen vollständig abzudecken vermag.

Erfindungsgemäß ist ferner der umgreifende Bereich des Strukturbauteils zumindest bereichsweise beabstandet von der freien Kante angeordnet, wobei zumindest bereichsweise ein Strukturmaterial zwischen dem Strukturbauteil und der freien Kante vorgesehen ist. Hierdurch kann insbesondere eine vollständige Abdichtung und/oder eine akustische Entkopplung und/oder eine hochfeste Verbindung der Schale und dem Strukturbauteil hergestellt werden. Das zum Einsatz kommende Strukturmaterial kann bestehen aus Butylkautschuksystemen, die dauerplastisch sein können oder durch Wärmezufuhr vernetzbar sind oder aus EVAbasierenden Schäumen, die durch Wärmezufuhr expandieren oder aus wärmereaktiven Strukturklebstoffen oder-schäumen bestehen. Insbesondere sind Strukturmaterialien der oberhalb ausführlich erwähnten Art denkbar.

Vorzugsweise ist das Strukturbauteil aus einem Kunststoffmaterial hergestellt. Insbesondere können dabei bekannte Polyolefine wie PE oder PP, PVC (weich oder hart), ABS, PC (insbesondere transparent), Polyamide (insbesondere PA6, PA6.6, PA4.6), Kunststoffe mit Füllstoffen (insbesondere GF, GK, V0, Mineralstoffe), TPE, TPU, oder PS als Werkstoffe zum Einsatz kommen. Als besonders vorteilhaft hat sich als Werkstoff für das Strukturmaterial der Einsatz eines Polyamids, insbesondere PA 6.6 erwiesen. Das Strukturbauteil kann dabei zudem wiederum ein Verbundbauteil sein und insbesondere faserverstärkt ausgelegt werden. Hierbei hat sich der Einsatz eines Polyamids mit einem Anteil von bis zu 60% Glasfasern als vorteilhaft herausgestallt. Besonders bevorzugt ist der Glasfaseranteil im bereich zwischen 15% und 35%.

Bevorzugt kommt ein Strukturbauteil mit einem hohen E-Modul zum Einsatz. Bevorzugt weist das Strukturbauteil Bereiche unterschiedlicher Stärke auf. Dabei können Bereiche der Schale, an dem besonders hohe Belastungen erwartet werden, mittels des Strukturbauteils mit einer großen Stärke verstärkt werden, an weniger belasteten Bereichen der Schale kann die Stärke des Strukturbauteils geringer ausgeführt werden, insbesondere um Material einzusparen.

Ein weiterer Vorteil ist der Einsatz eines Strukturbauteils aus einem faserverstärktem Kunststoff. Durch den Einsatz eines Faser-Kunststoff-Verbunds als Werkstoff für das Strukturbauteils kann eine hohe spezifische Steifigkeit und Festigkeit erreicht werden, so dass insbesondere ein geeignetes Strukturbauteils für Leichtbauanwendungen bereitgestellt werden kann. Als Verstärkungsfasern kommen insbesondere anorganische Verstärkungsfasern, wie beispielsweise Basaltfasern, Borfasern, Glasfasern, Keramikfasern oder auch Kielsäurefasern zum Einsatz. Denkbar sind auch metallische Verstärkungsfasern, wie beispielsweise Stahlfasern. Zudem kann sich der Einsatz von organischen Verstärkungsfasern, wie beispielsweise Aramidfasern, Kohlenstofffäsern, Polyesterfasern, Nylonfasern oder Polyethylenfasern als sinnvoll erweisen. Denkbar ist auch der Einsatz von nachwachsenden Verstärkungsfasern, von Naturfasern, wie beispielsweise Flachsfasern, Hanffasern oder Sisalfäsern.

Ein weiterer Vorteil ist der Einsatz eines Strukturbauteils aus Metall, wie beispielsweise Stahl, Aluminium, Magnesium oder auch einem Stahlgeflecht. Der Einsatz derartiger Strukturbauteils eignet sich besonders für verstärkte Verbundbauteile, bei denen hohe Anforderungen an die Steifigkeit und Festigkeit gestellt werden. Um die Strukturbauteils vor äußeren Einflüssen zu schützen, kann der Einsatz von beschichteten und/oder lackierten Metall von Vorteil sein.

Die Befestigung des Strukturbauteils an der Schale kann zudem mittels Einkleben über das Strukturmaterial erfolgen. Ferner können zusätzlich oder alternativ Clipse oder Aufsteckfixierungen sowie entsprechende Aufnahmen oder korrespondierende Bauteile an dem Strukturbauteil und/oder an der Schale vorgesehen werden. Auch sind Verbindungsmittel aus einem metallischen Werkstoff wie beispielsweise Metallaschen denkbar, so dass das Strukturbauteil über ein Schweißverfahren mit der Schale verbunden werden kann. Weitere denkbare Verbindungsmöglichkeiten von Strukturbauteil und Schale sind das Klemmen mittels angebrachten Klemmrippen oder -noppen.

Das zum Einsatz kommende Strukturmaterial weist vorzugsweise eine Druckfestigkeit im Bereich von 5 MPa bis 40 MPa auf, besonders bevorzugt sind Strukturmaterialien im Bereich von 10 MPa bis 25 MPa. Ferner weit das Strukturmaterial vorzugsweise ein E-Modul im Bereich von 300 MPa und 25000 MPa auf, ganz besonders bevorzugt im Bereich von 500 und 1500 MPa. Ferner hat es sich als besonders vorteilhaft herausgestellt, als Strukturmaterial thermisch expandierbare Strukturschäume einzusetzen. Vorzugsweise kommen als Strukturmaterialien, die die benötigte hohe Festigkeit und Klebekraft aufweisen, mittel- bis niedrigexpandierende Schäume zum Einsatz. Expandierende Schäume haben den Vorteil, dass zum Ausgleich von Fertigungstoleranzen bei den Wänden und bei dem Strukturbauteil Lücken geschlossen werden können. So kann auch bei Fertigungstoleranzen ein Maximum an Kraftübertragung gewährleistet werden. Ferner dient die Schließung der Lücken dem Korrosionsschutz der Bauelemente. Ein weiterer Vorteil bei dem Einsatz von derartigen Schäumen ist der Erhalt der Festigkeitseigenschaften über einen weiten Temperaturbereich bis über 80°C, wodurch die Einsatzmöglichkeit eines erfindungsgemäßen Bauteils weiter erhöht wird.

Dabei hat sich der Einsatz eines thermisch vernetzenden Schaums als Strukturmaterial als vorteilhaft erwiesen. Vorzugsweise enthält die expandierbare Masse mindestens die folgenden Komponenten:
a) ein bei Temperaturen im Bereich von 120 bis 220 °C mit sich selbst oder mit anderen Bestandteilen der Masse vernetzendes Harz (im Weiteren auch als "Bindemittel" bezeichnet),
b) ein Treibmittel, das bei einer Temperatur im Bereich von 120 bis 220 °C unter Volumenvergrößerung oder Gasentwicklung reagiert und hierdurch das Volumen der Masse um mindestens 20 % vergrößert.

Geeignete polymere Basisbindemittel ("Harze") für das thermisch expandierbare Strukturmaterial sind beispielsweise Ethylenvinylacetat-Copolymere (EVA), Copolymere des Ethylens mit (Meth)acrylatestem, die gegebenenfalls noch anteilig (Meth)acrylsäure einpolymerisiert enthalten, statistische oder Blockcopolymere des Styrols mit Butadien oder Isopren oder deren Hydrierungsprodukte. Letztere können auch Triblockcopolymere vom Typ SBS, SIS oder deren Hydrierungsprodukte SEBS oder SEPS sein. Zusätzlich können die Bindemittel noch Vernetzer, Haftvermittler, klebrigmachende Harze ("tackifier"), Weichmacher sowie weitere Hilfs- und Zusatzstoffe wie z. B. niedermolekulare Oligomere enthalten. Zur Erzielung einer ausreichenden Treibfähigkeit und Expansionsfähigkeit enthalten diese polymeren Bindemittel noch Treibmittel, die weiter unten beschrieben werden.

Insbesondere kann ein alternatives Bindemittelsystem ("Harz) für das reaktive expandierbare Strukturmaterial auf Basis von Epoxidharzen und Härtern verwendet werden, wie sie beispielsweise in der WO 00/52086 oder der WO 2003/054069 sowie der WO 2004/065485 offenbart sind. Für die das Material betreffenden Aspekte darf auf die genannten Dokumente verwiesen werden, deren Offenbarungsgehalte insoweit die Offenbarung der vorliegenden Patentanmeldung ergänzt.

Weiterhin können die reaktiven Strukturmaterialien gängige weitere Hilfs- und Zusatzmittel wie z. B. Weichmacher, Rheologie-Hilfsmittel, Netzmittel, Haftvermittler, Alterungsschutzmittel, Stabilisatoren und/oder Farbpigmente enthalten.

Alternativ ist auch der Einsatz eines chemisch vernetzenden Schaums als hochfestes Strukturmaterial denkbar. Insbesondere kommen durch chemische Reaktionen selbst expandierende Schäume, durch Exothermie und möglicherweise geeignete Blähmittel expandierende oder durch zu Zufuhr von Luft oder einem anderen Gas mittels bekannter Schaumtechnologien variabel im Blähgrad einstellbar expandierende Schäume zum Einsatz.

Wie auch bei den bisherigen Strukturmaterialien, wie beispielsweise Verstärkungsmassen gemäß Stand der Technik üblich, ist es erwünscht, dass das Strukturmaterial beim Erhitzen auf die Härtungstemperatur geringfügig aufschäumt und hierdurch ihr Volumen vergrößert. Hierdurch wird ein allseitiger wirksamer Kraftschluss zwischen dem Verbindungselement und dem Strukturbauteil bzw. den Wänden erreicht. Daher ist es auch bei der erfindungsgemäßen Baugruppe bevorzugt, dass das Strukturmaterial beim Erhitzen auf 100 bis 200 °C aufschäumt und hierbei sein Volumen um etwa 30 bis etwa 250 % vergrößert. Treibmittel, die diesen Effekt bewirken, sind dem Fachmann aus dem Stand der Technik bekannt. Beispiele hierfür werden weiter unten angegeben.

Um nach dem Aushärten die Aufgabe der Versteifung und/oder der Dämmung und/oder der Dämpfung insbesondere des Hohlraums zwischen den Wänden erfüllen zu können, ist es zweckmäßig, dass das zum Einsatz kommende Strukturmaterial einen E-Modul von mindestens 180 MPa aufweist. Wie dem Fachmann bekannt, kann dies durch Art und Menge von Härtern und Beschleunigern eingestellt werden. Beispiele hierfür werden weiter unten angeführt.

Als thermisches Strukturmaterial sind solche Massen geeignet, die dem Fachmann aus dem Stand der Technik für das Aussteifen von Hohlräumen in Fahrzeugkarosserien bekannt sind. Vorzugsweise muss das Strukturmaterial mindestens folgende Bestandteile enthalten: mindestens ein reaktives Harz und mindestens einen Härter und/oder Beschleuniger. Um das erwünschte Ausdehnungsverhalten einzustellen, ist es bevorzugt, dass das Strukturmaterial zusätzlich mindestens ein Treibmittel enthält.

Das härtbare Harz kann beispielsweise ausgewählt sein aus: Polyurethanen mit freien oder blockierten Isocyanatgruppen, ungesättigten Polyester-/Styrolsystemen, Polyester/Polyolmischungen, Polymercaptanen, Siloxan-funktionellen reaktiven Harzen oder Kautschuke, Harzen auf Benzoxazin-Basis sowie Harzen auf Basis von reaktiven Epoxidgruppen.

Zur Gewichtsreduzierung enthält das Strukturmaterial vorzugsweise zusätzlich zu den vorgenannten "normalen" Füllstoffen sog. Leichtfüllstoffe, die ausgewählt werden aus der Gruppe der Metallhohlkugeln wie z. B. Stahlhohlkugeln, Glashohlkugeln, Flugasche (Fillite), Kunststoffhohlkugeln auf der Basis von Phenolharzen, Epoxidharzen oder Polyestern, expandierte Microhohlkugeln mit Wandmaterial aus (Meth)acrylsäureester-Copolymeren, Polystyrol, Styrol(meth)acrylat-Copolymeren sowie insbesondere aus Polyvinylidenchlorid sowie Copolymeren des Vinylidenchlorids mit Acrylnitril und/oder (Meth)acrylsäureestern, keramische Hohlkugeln oder organische Leichtfüllstoffe natürlichen Ursprungs wie gemahlene Nussschalen, beispielsweise die Schalen von Cashewnüssen, Kokosnüssen oder Erdnussschalen sowie Korkmehl oder Kokspulver. Besonders bevorzugt werden dabei solche Leichtfüllstoffe auf der Basis von Mikrohohlkugeln, die in der ausgehärteten Formkörpermatrix eine hohe Druckfestigkeit des Formkörpers gewährleisten.

In einer besonders bevorzugten Ausführungsform enthalten die Zusammensetzungen für das thermisch härtbaren Strukturmaterial zusätzlich Fasern auf der Basis von Aramidfasern, Kohlenstoff-Fasern, Metallfasern - z.B. aus Aluminium-, Glasfasern, Polyamidfasern, Polyethylenfasern oder Polyesterfasern, wobei diese Fasern vorzugsweise Pulpfasern oder Stapelfasern sind, die eine Faserlänge zwischen 0,5 und 6 mm haben und einen Durchmesser von 5 bis 20 µm. Besonders bevorzugt sind hierbei Polyamidfasern vom Typ der Aramidfaser oder auch Polyesterfasern.

Alternativ kann sich der Einsatz eines Strukturklebstoffes als Strukturmaterial als vorteilhaft erweisen. Denkbar sind hier sowohl ein- als auch zweikomponentige strukturklebstoffe. Bei dem zum Einsatz kommenden Strukturmaterial kann es sich aber auch um ein Einkomponenten-System handeln, welches Epoxidharze und aktivierbare oder latente Härter enthalten.

Weiterhin können diese Strukturmaterialien als einkomponentige vorgelierbare Klebstoffe formuliert werden, im letztgenannten Fall enthalten die Zusammensetzungen entweder feinteilige thermoplastische Pulver, wie z. B. Polymethacrylate, Polyvinylbutyral oder andere thermoplastische (Co)polymere oder das Härtungssystem ist so abgestimmt, dass ein zweistufiger Härtungsprozess stattfindet, wobei der Gelierungsschritt nur eine teilweise Aushärtung des Klebstoffes bewirkt und die Endaushärtung im Fahrzeugbau z. B. in einem der Lackieröfen, vorzugsweise im KTL-Ofen, stattfindet

Weiterhin können die Strukturmaterialzusammensetzungen gängige weitere Hilfs- und Zusatzmittel wie z. B. Weichmacher, Reaktivverdünner, Rheologie-Hilfsmittel, Netzmittel, Alterungsschutzmittel, Stabilisatoren und/oder Farbpigmente enthalten.

Als Strukturmaterialmatrix können insbesondere eingesetzt werden:

Gemäß WO00/37554 Zusammensetzungen, die
A) ein Copolymeres mit mindestens einer Glasübergangstemperatur von -30°C oder niedriger und gegenüber Epoxiden reaktiven Gruppen oder ein Reaktionsprodukt dieses Copolymeren mit einem Polyepoxid sowie
B) ein Reaktionsprodukt aus einem Polyurethan-Prepolymer und einem Polyphenol oder Aminophenol sowie
C) mindestens ein Epoxidharz enthalten

Genauere Angaben hierzu könnend er genannten WO00/37554 entnommen werden.

Gemäß WO01/94492 Zusammensetzungen, enthaltend
mindestens ein Epoxidharz mit durchschnittlich mehr als einer Epoxidgruppe pro Molekül
ein Copolymeres mit einer Glasübergangstemperatur von -30°C oder niedriger und gegenüber Epoxiden reaktiven Gruppen oder ein Umsetzungsprodukt dieses Copolymeren mit einem stöchiometrischen Überschuß eines Epoxidharzes gemäß A)
einen latenten, bei erhöhter Temperatur aktivierbaren Härter für Komponente A), und entweder
ein Reaktionsprodukt herstellbar aus einem difunktionellen aminoterminierten Polymer und einem Tri- oder Tetracarbonsäureanhydrid, gekennzeichnet durch im Mittel mehr als eine Imidgruppe und Carboxylgruppe pro Molekül, oder
ein Reaktionsprodukt herstellbar aus einem tri- oder mehrfunktionellen Polyol oder einem tri- oder mehrfunktionellen aminoterminierten Polymer und einem cyclischen Carbonsäureanhydrid, wobei das Reaktionsprodukt im Mittel mehr als eine Carboxylgruppe pro Molekül enthält, oder
eine Mischung der Reaktionsprodukte gemäß D) und E).

Genauere Angaben hierzu könnend er genannten WO01/94492 entnommen werden.

Gemäß WO00/20483 Zusammensetzungen, enthaltend
A) ein Copolymeres mit mindestens einer Glasübergangstemperatur von - 30°C oder niedriger und gegenüber Epoxiden reaktiven Gruppen
B) ein Reaktionsprodukt herstellbar durch Umsetzung eines Carbonsäureanhydrids oder -dianhydrids mit einem Di- oder Polyamin und ei-nem Polyphenol oder Aminophenol
C) mindestens ein Epoxidharz.

Genauere Angaben hierzu könnend er genannten WO00/20483 entnommen werden.

Bei der erfindungsgemäßen Verwendung als Strukturmaterial wird der zum Einsatz kommende Klebstoff nach der Verbindung der Bauelemente der Baugruppe beispielsweise bei einer Temperatur im Bereich von 120 bis 200 °C für eine Zeitdauer im Bereich von 30 bis 120 Minuten thermisch gehärtet. Insbesondere kann die Härtung für eine Zeitdauer im Bereich von 50 bis 70 Minuten bei einer Temperatur im Bereich von 110 bis 130 °C durchgeführt werden.

Auch kann sich der Einsatz eines Materials als sinnvoll erwiesen, wie es in der internationalen Patentanmeldung PCT/EP2007/008141 beschrieben wird. Für die das Material betreffenden Aspekte darf auf das genannte Dokument verwiesen werden, deren Offenbarungsgehalt insoweit die Offenbarung der vorliegenden Patentanmeldung ergänzt.

Die Aktivierung und Expansion des expansionsfähigen Strukturmaterials kann vorzugsweise unter Ausnutzung der Prozesswärme eines KTL-Ofens zur Aushärtung der kathodischen Tauchlackierung beispielsweise einer Kraftfahrzeugskarosserie erfolgen. Selbstverständlich ist auch eine gesonderte Einwirkung von Wärme zur Expansion des expansionsfähigen Materials denkbar.

Ein weiterer Vorteil ist das Aufbringen des Strukturmaterials auf das Strukturbauteil durch ein Spritzgussverfahren. Dabei wird das vorzugsweise expandierbare Strukturmaterial auf das aus einem metallischen Werkstoff oder einem Kunststoffmaterial bestehende Verbindungselement während eines Spritzgussvorganges aufgespritzt. Vorzugsweise werden alle zum Einsatz kommenden Strukturmaterialien in einem Spritzgussvorgang aufgebracht, um Zeit und Kosten zu sparen. Durch den Einsatz eines Spritzgussvertahrens zum Aufbringen der Strukturmaterialien können diese präzise auf die vorgesehenen Stellen des Strukturbauteils aufgebracht werden. Zudem ist die Dosierung der Menge an Strukturmaterial einfach, so dass nicht zu viel Material aufgebracht wird, was die Kosten erhöhen würde oder zu wenig Material. Alternativ kann das Strukturmaterial auf das Strukturbauteil auch mittels eines Pumpverfahrens, beispielsweise durch einen Roboter automatisiert aufgebracht werden.

Besonders vorteilhaft bei der Herstellung des Strukturbauteils aus einem Kunststoffmaterial hat sich die Herstellung des Strukturbauteils und Ausrüstung mit Strukturmaterialien mittels eines Verbindungsspritzgussverfahrens und/oder Biinjektionsspritzgussverfahrens erwiesen. Dabei kann in einem ersten Schritt das Strukturbauteil selbst mit möglichen Aufnahmen für das Strukturmaterial und/oder Verbindungsmitteln zur Lagefixierung hinsichtlich der Schale und/oder gegebenenfalls weiteren Ausstattungsmerkmalen durch Injektion eines thermoplastischen Werkstoffes, insbesondere eines Polyamids in eine Spritzgussform hergestellt werden. Die beiden Hälften der Spritzgussform werden im Anschluss zur Entformung auseinander gezogen. In einem zweiten Arbeitsschritt kann dann in einer zweiten geeigneten Spritzgussform eine Vielzahl von Strukturmaterialien, insbesondere bestehend aus einem thermisch expansionsfähigen Material aufgebracht werden. Durch eine derartige, vorzugsweise vollautomatisierte Herstellung eines erfindungsgemäßen Strukturbauteils mit Strukturmaterial kann ein genau auf die zu'verstärkende Schale ausgelegte Strukturbauteil mit Strukturmaterial mit geringen Fertigungstoleranzen bereitgestellt werden.

Ein weiterer Vorteil ist der Einsatz eines verstärkten Verbundbauteils dadurch wobei zumindest eine den Raum bestimmende Wand der Schale eine freie Kante aufweist. Insbesondere bei einer Anordnung des Strukturbauteils zumindest bereichsweise innerhalb des Raumes kann mittels der zumindest bereichsweisen Abdeckung einer Kante durch das Strukturbauteil die Versteifungsleistung des Strukturbauteils erhöht werden.

Ein weiterer Vorteil ist der Einsatz einer zumindest bereichsweise rinnenförmigen Schale. Derartige Schalen eignen sich besonders für den Fahrzeug- und Anlagenbau da mit vergleichsweise wenig Material besonders stabile Schalen bereitgestellt werden können. Insbesondere können dabei Schalen mit U- oder V-förmigen Querschnitten zum Einsatz kommen. Zudem eignen sich rinnenförmige Schalen in Form von I-Profilen oder Doppel-T-Profilen, T-Profilen, Z- Profilen oder L-Profilen, bei denen durch die Profilform bedingt ein als Rinne gestalteter Raum zumindest teilweise begrenzt wird.

Hierbei hat es sich als besonders vorteilhaft herausgestellt, das Strukturbauteil derart zu gestalten, dass es in seiner dem rinnenförmigen Teil der Schale zugewandten Seite im Wesentlichen die gleiche rinnenförmige Form aufweist, wie der rinnenförmige Teil der Schale. Dementsprechend könnte beim Einsatz einer rinnenförmigen Schale mit einem U-Profil ein Strukturbauteil zum Einsatz kommen, was ebenfalls ein U-Profil mit aufweist und welches vorzugsweise derart bemessen ist, dass es in dem von der Schale begrenzten Raum eingelegt werden kann.

Herbei ist es besonders vorteilhaft, das Strukturbauteil derart auszugestalten, dass dieses selbst einen zweiten rinnenförmigen Raum umgrenzt, wobei Versteifungsmittel vorgesehen sind, um die Schale zu verstärken, wobei die Versteifungsmittel in dem zweiten rinnenförmigen Raum des Strukturbauteils vorgesehen sind. Insbesondere können hierbei Versteifungsrippen zum Einsatz kommen, die sich von der einen Seite eines des zweiten rinnenförmigen Raums begrenzenden Wandabschnitt des Strukturbauteils zu einem gegenüberliegenden Wandabschnitt erstrecken. Dabei können die Rippen vorzugsweise derart angeordnet sein, dass sie sich gemäß der zu erwartenden auf die Schale und das Strukturbauteil einwirkenden Kräfte erstrecken, um durch das Strukturbauteil eine optimale Verstärkung und/oder Versteifung der Schale bereitzustellen. Zudem können die Versteifungsmittel als Verstärkungsstege und/oder -säulen unterschiedlicher Wandstärke ausgestaltet werden, welche bezogen auf die jeweiligen Spannungszonen des Verbundbauteils ausgelegt werden. In diesem Sinne würde eine Zonen mit höherer erwarteter Spannung mit dickeren Rippen, Säulen oder Stegen ausgestattet, als Zonen mit geringerer erwarteter Spannung.

Ein weiterer Vorteil Verbundbauteil ist die Ausgestaltung des Strukturbauteils derart, dass es im Wesentlichen den gesamten den Raum begrenzenden Teil der Schale bedeckt, um einen Schutz vor Umwelteinflüssen für die Schale bereitzustellen. Demgemäß deckt das Strukturbauteil beispielsweise bei einer Schale mit einem U-Profil sowohl den Bodenbereich der Schale und die beiden Wandbereiche, die den Raum begrenzen. Somit kann verhindert werden, dass insbesondere bei beispielsweise Fahrzeugträgern im Raum angesammelte Feuchtigkeit nicht mit der Schale selbst in Kontakt kommet, so dass eine Korrosion vermieden werden kann.

Ein weiterer Vorteil ist die Ausstattung des Strukturbauteils mit Mitteln zur Befestigung eines Anbauteils. Dies hat den besonderen Vorteil, dass neben der Verstärkung und/oder Versteifung der Schale mittels des Strukturbauteils eine Verbindungs- oder Montagemöglichkeit von weiteren Anbauteilen über das Strukturbauteil an die Schale bereitgestellt werden kann. Dabei können die Mittel insbesondere als Funktionsbauteile wie Halter, Haken, Durchbrüche für Verschraubungen oder ähnliche dem Fachmann bekannte Verbindungselemente ausgestaltet sein. Derartige Bauteile stellen oft einen sensiblen Bereich für äußere Einflüsse bspw. bei im Fahrzeugbau zum Einsatz kommenden Schalen dar. Durch die Bereitstellung dieser Mittel an dem Strukturbauteil kann eine weitere Schutzmöglichkeit für die Schale durch das Strukturbauteil bereitgestellt werden.

Ein weiterer Vorteil bei dem Einsatz einer zumindest bereichsweise rinnenförmig gestalteten Schale ist die Gestaltung des Strukturbauteils derart, dass es die Rinne zumindest bereichsweise derart abdeckt, dass zwischen Strukturbauteil und Schale ein Hohlraum gebildet wird und dass zumindest ein Verstärkungsmittel an dem Strukturbauteil vorgesehen ist, das in den Hohlraum in Richtung der Schale ragt.

Dabei hat sich zudem der Einsatz eines Strukturmaterials als vorteilhaft erwiesen, welches mit dem Verstärkungsmittel in Kontakt ist.

Im Folgenden wird die Erfindung anhand von in den Zeichnungen dargestellten Ausführungsbeispielen näher erläutert:
Figur 1 zeigt eine perspektivische Schnittansicht eines erfindungsgemäßen Verbundbauteils mit einer Schale, einem Strukturbauteil und einem expansionsfähigen Strukturmaterial,
Figur 2 eine perspektivische Ansicht eines erfindungsgemäßen Verbundbauteils in Form eines Querlenkers eines Kraftfahrzeugs.
Figur 3 zeigt eine Schnittansicht einer alternativen erfindungsgemäßen Verbundbauteils,
Figur 4 zeigt eine Schnittansicht einer weiteren Alternative eines erfindungsgemäßen Verbundbauteils,
Figur 5 zeigt eine Schnittansicht einer weiteren Alternative eines erfindungsgemäßen Verbundbauteils.

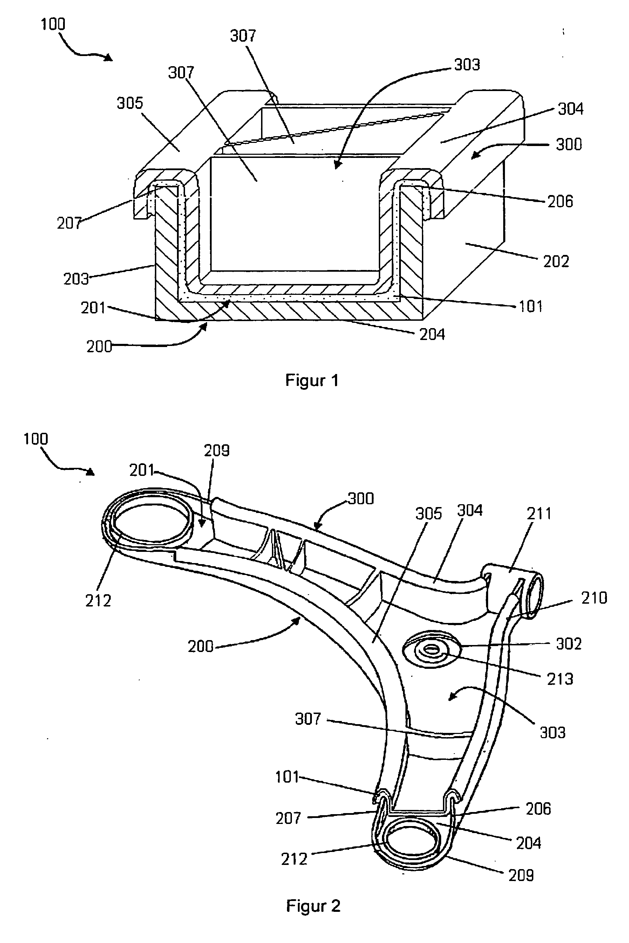

Figur 1 zeigt ein Verbundbauteil 100 mit einer rinnenförmigen Schale 200 und einem in die rinnenförmige Schale 200 eingelegten ebenfalls rinnenförmigen Strukturbauteil 300. Die Schale 200 weist in der gezeigten Schnittansicht ein U-Profil auf und beinhaltet einen Boden 204, eine erste Wand 202 sowie eine zweite Wand 203, welche einen Raum 201 bereichsweise umschließen. Das in dem Raum 201 vorgesehene Strukturbauteil 300 ist beabstandet zu dem Boden 204 sowie zu den Wänden 202, 203 angeordnet. Zwischen dem Strukturbauteil 300 und der Schale 200 ist ein Zwischenraum vorgesehen, der mit einem Strukturmaterial 101 ausgefüllt ist. Im vorliegenden Fall handelt es sich um ein thermisch expandierbares Strukturmaterial 101, welches sich im gezeigten Ausführungsbeispiel in expandiertem Zustand befindet und einerseits eine Fixierung des Strukturbauteil 300 an der Schale 200 bereitstellt, andererseits den Zwischenraum zwischen dem Strukturbauteil 300 und der Schale 200 derart ausfüllt, dass insbesondere kein Schmutz und keine Feuchtigkeit in den Zwischenraum gelangen können. Zur Besserung Haftung des Sturkturmaterials 101 kann insbesondere die Oberfläche des Strukturbauteils 300 mit einer hohen Rauhigkeit ausgestattet werden. Ebenso kann auch die Oberfläche der Schale 200 gestaltet sein oder bearbeitet werden.

Die beiden Wände 202, 203 münden an ihrem den Boden 204 abgewandten Ende in einer ersten freien Kante 206 bzw. in einer zweiten freien Kante 207. Das Strukturbauteil 300 ist derart gestaltet, dass es sich im rinnenförmigen Raum 201 über den Boden 204 sowie über die Wände 202, 203 erstreckt und mittels eines ersten Umgriffs 304 umgreifend die erste freie Kante 206 abdeckt und sogar teilweise die Außenfläche der ersten Wand 202 überlappt. Zudem weist das Strukturbauteil 300 einen zweiten Umgriff 305 auf, mit dem es umgreifend das zweite Ende 207 abdeckt und auch auf dieser Seite bereichsweise die Außenfläche der Seitenwand 203 überlappt. Auch im Bereich der Umgriffe 304, 305 ist das Strukturbauteil 300 beabstandet von der Schale 200 angeordnet, wobei in dem so bereitgestellten Zwischenraum das Strukturmaterial 101 vorgesehen ist, so dass insbesondere die beiden freien Kanten 206, 207 vor äußeren Einflüssen und insbesondere vor Korrosion geschützt werden.

Die Umgriffe 304, 305 haben den Vorteil dass die Versteifungsleistung des verstärkenden Innenkörpers des Strukturbauteils 300 erhöht werden kann, wobei gleichzeitig die Kanten 206, 207 der Seitenwände 202, 203 der Schale 200 zusätzlich vor Korrosion geschützt werden können. Gleichzeitig kann bei Außenanwendungen wie z.B. beim einsatz der Schale 200 als Achsträger, Querlenker oder anderen Anbauteilen, insbesondere im Fahrzeugbau auch der Einfluß der Alterung durch Umweltbedingungen reduziert werden.

Im vorliegenden Ausführungsbeispiel handelt es sich um eine Schale 200 aus einem metallischen Werkstoff und um ein Strukturbauteil 300 aus einem Polyamid, welches vor der Montage mit der Schale 200 mit dem Strukturmaterial 101 in unexpandiertem Zustand ausgerüstet worden ist. Nach der Montage des Strukturbauteils 300 und der Schale 200 ist das Strukturmaterial 101 expandiert worden, um eine Fixierung zwischen den beiden Bauteilen 200, 300 bereitzustellen. Durch eine derartige Anordnung kann ein besonders starkes Verbundbauteil 100 bereitgestellt werden, wobei das Strukturbauteil 300 die Schale 200 verstärkt. Auf diese Weise kann eine Schale 200 zur Anwendung kommen, die ob der Verstärkung durch das Strukturbauteil 300 bei gleicher oder sogar verbesserter Festigkeit mit weniger Material hergestellt werden kann. Mittels der flächigen Abdeckung der Wände 202, 203 und des Bodens 204 durch das Strukturbauteil 300 und insbesondere mittels der zumindest bereichsweisen Erstreckung des Strukturbauteils 300 über dessen Umgriffe 304, 305 über die freien Kanten 206, 207 kann zudem eine Schutzmöglichkeit der Schale 200 und insbesondere der freien Kanten 206, 207 bereitgestellt werden.

Figur 2 zeigt eine perspektivische Ansicht eines erfindungsgemäßen verstärkten Verbundbauteils 100, welches als Querlenker für ein Kraftfahrzeug zum Einsatz kommt. Das Verbundbauteil 100 besteht auch hier aus einer als Schalenkörper zum Einsatz kommenden Schale 200, welches drei Schenkel 208, 209, 210 aufweist. An den Schenkeln 208, 209 sind zwei Durchzüge 212 zur Aufnahme von nicht gezeigten Kugelgelenken vorgesehen. Der Schenkel 210 wiederum weist eine Hülse 211 für beispielsweise ein nicht dargestelltes Gummilager auf. Die Schale 200 umschließt auch hier bereichsweise einen rinnenförmigen Raum 201, mit einem Boden 204. Zudem ist der Raum begrenzt durch zwei Wände, die zwei freie Kanten 206, 207 aufweisen. Zur Verstärkung des Querlenkers kommt hier das Strukturbauteil 300 zum Einsatz, welches derart gestaltet ist, dass es in den rinnenförmigen Raum 201 eingesetzt und mittels eines Strukturmaterials 101 mit der Schale 200 verbunden werden kann. Das Strukturbauteil 300 ist seinerseits ebenfalls rinnenförmig gestaltet und bestimmt zumindest bereichsweise den Raum 303. Die Grundform des Strukturbauteils 300 entspricht im wesentlichen der Grundform der Schale 200. Das Strukturbauteil 300 ist derart gestaltet, dass es zwei Umgriffe 304, 305 aufweist, die die freien Kanten 206, 207 der Schale 200 umgreifend abdecken. Zur Verstärkung der Schale 200 und zum Schutz der freien Kanten 206, 207 ist der Zwischenraum zwischen den Umgriffen 304, 305 und den freien Kanten 206, 207 mit einem Strukturmaterial 101 ausgefüllt.

Ferner ist das Strukturbauteil 300 mit einer Öffnung 302 ausgestattet, durch die Teile des Bodens 204 freiliegen und im vorliegenden Ausführungsbeispiel ein Kragen 213 hervorsteht, an dem weitere Bauteile mit dem Querlenker verbunden werden können. Zur weiteren Verstärkung sind auch hier mehrere Versteifungsrippen 307 vorgesehen, die sich durch den Raum 303 des Verstärkungsbauteils 300 erstrecken. Durch die Ausrüstung der als Querlenker zum Einsatz kommenden Schale 200 mit dem gezeigten Strukturbauteil 300 kann ein verstärktes Verbundbauteil 100 bereitgestellt werden. Mittels der Fixierung des Strukturbauteils 300 an der Schale 200 über das Strukturmaterial 101 können auf die Schale 200 einwirkende Kräfte von dem Strukturbauteil 300 aufgenommen werden. Hierfür sind insbesondere an stark belasteten Bereichen Versteifungsrippen 307 vorgesehen sind. Zudem kann die Schale 200 vor äußeren Einflüssen, insbesondere vor Korrosion geschützt werden, indem weite Bereiche der Wände und des Bodens 204 von dem Strukturbauteil 300 abgedeckt werden. Ferner stellt das Strukturbauteil 300 mittels der Umgriffe 304, 305 eine zusätzliche Schutzmöglichkeit für die freien Kanten 206, 207 der Schale 200 bereit.

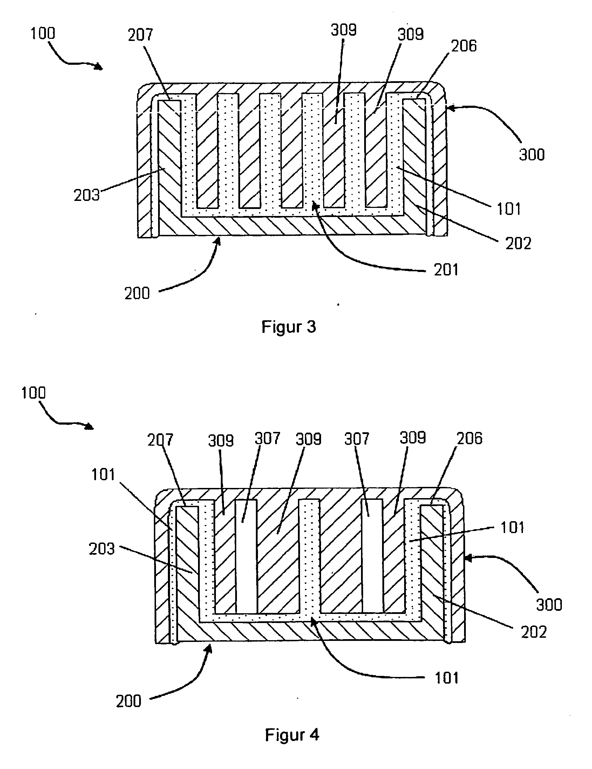

Figur 3 zeigt ein Schnittansicht eines weiteren erfindungsgemäßen Verbundbauteils 100 mit einer U-förmigen, einen rinnenförmigen Raum zumindest bereichsweise umschließenden Schale 200 und einem aufgesetzten Strukturbauteil 300. Das Strukturbauteil 300 ist dabei als Deckelkonstruktion gestaltet, so dass es den Raum 201, die freien Kanten 206, 207 und die Außenbereiche der Wände 202, 203 abgedeckt Dabei ist das Strukturbauteil 300 beabstandet zu der Schale 200 angeordnet, wobei im Zwischenraum das Strukturmaterial 101 vorgesehen ist. Hierdurch kann eine Fixierung des Strukturbauteils 300 an der Schale 200 sowie eine Abdichtung des Zwischenraums zwischen Strukturbauteil 300 und Schale 200 bereitgestellt werden. Zudem kann durch eine derartige Gestaltung auch eine galvanische Trennung zwischen dem Strukturbauteil 300 und der Schale 200 gewährleistet werden, die beispielsweise im Fahrzeugbau notwendig sein kann, insbesondere wenn das Strukturbauteil 300 und die Schale 200 aus einem metallischen, elektrisch leitfähigen Werkstoff bestehen.

Zur weiteren Verstärkung der Schale 200 weist das Strukturbauteil 300 in den Raum 201 vorstehende Verstärkungsmittel 309 auf, die im gezeigte Ausführungsbeispiel zylinderförmig gestaltet sind. In der Schnittansicht ist zu erkennen, dass das Strukturbauteil 300 eine Vielzahl von nebeneinander angeordneten Verstärkungsmitteln 309 aufweist, die beabstandet voneinander sind, wobei in den Zwischenräumen insbesondere zwischen den Verstärkungsmitteln 309 wiederum das Strukturmaterial 101 vorgesehen ist.

Figur 4 zeigt eine Schnittansicht einer weiteren Ausführungsform eines erfindungsgemäßen verstärkten Verbundbauteils 100. Auch hier kommt eine Schale 200 mit einem U-Profil zum Einsatz, wobei das Strukturbauteil 300 den Raum 201, die freien Kanten 206, 207 sowie die Außenflächen der Wände 202, 203 abdeckt. Auch hier ist in dem Zwischenraum zwischen dem Strukturbauteil 300 und der Schale 200 das Strukturmaterial 101 zur Fixierung und zur Abdichtung vorgesehen.

Wie bei dem in Figur 3 gezeigten Verbundbauteil 100 weist auch das hier zum Einsatz kommende Strukturbauteil 300 eine Vielzahl von in den Raum vorstehenden Verstärkungsmitteln 309 auf, die im gezeigten Ausführungsbeispiel unterschiedliche Abmessungen und Durchmesser haben. Auch hier sind die Verstärkungsmittel 309 beabstandet voneinander angeordnet. Einige der Verstärkungsmittel 309 sind jedoch über Verstärkungsmittel 307 miteinander verbunden. Andere Verstärkungsmittel 309 wiederum sind lediglich beabstandet voneinander angeordnet, wobei im Zwischenraum zwischen diesen Verstärkungsmitteln 309 das Strukturmaterial 101 angeordnet ist. Auf diese Weise kann ein besonders festes Verbundbauteil 100 bereitgestellt werden, was durch die besondere Form des Strukturbauteils 300 außerdem vor äußeren Einflüssen und vor Korrosion geschützt ist.

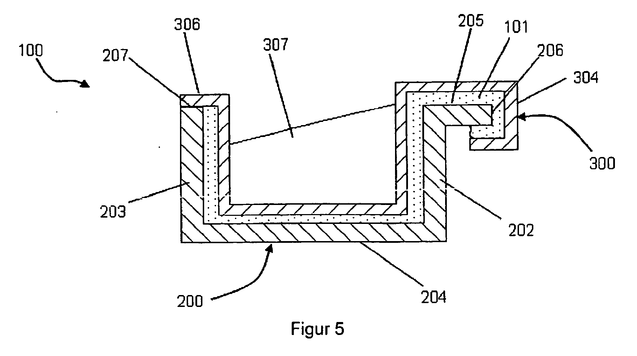

Figur 5 zeigt eine Schnittansicht weitere Ausführungsform eines erfindungsgemäßen Strukturbauteils 100. Die zum Einsatz kommende Schale 200 weist auch hier als Grundform ein U-Profil auf, wobei die Wand 202 an ihrer hinsichtlich des Bodens 204 abgewandten Seite in einem rechten Winkel abknickt und einen parallel zum Boden 204 verlaufenden flächigen Stirnbereich 205 aufweist der in der freien Kante 206 mündet. Die gegenüberliegende Wand 203, die in der freien Kante 207 mündet, weist eine planare Form auf. Das zum Einsatz kommende Strukturbauteil 300 ist im gezeigten Fall derart gestaltet, dass es die Innenseiten der Wände 202, 203 und des Bodens 204 bedeckt, wobei auch hier ein Zwischenraum vorgesehen ist, der mit dem Strukturmaterial ausgefüllt ist. Im Bereich der freien Kante 207 weist das Strukturbauteil 300 eine Abdeckung 306 auf, der die Stirnfläche der Wand 203, also die freie Kante 207 abdeckt, jedoch nicht umgreifend gestaltet ist, also keine Außenseite der Wand 203 abdeckt. Zudem ist zwischen der Abdeckung 306 und der freien Kante 207 kein Zwischenraum vorgesehen. Vielmehr liegt das Strukturbauteil 300 mit der Abdeckung 306 direkt auf der freien Kante 207 auf.

Auf der gegenüberliegenden Seite ist das Strukturbauteil der form der Wand 202 angepasst und beinhaltet eine Abdeckung für den Stirnbereich 205 sowie einen Umgriff 304 für die freie Kante 206. Hier ist das Strukturbauteil 300 beabstandet von der Schale 200 angeordnet, wobei im Zwischenraum wieder das Strukturmaterial 101 vorgesehen ist. Im Bereich der Abdeckung der Innenseiten der Wände 202, 203 und des Bodens 204 ist das Strukturbauteil 300 rinnenförmig gestaltet, wobei sich ein schräg über die Rinne von der einen die Rinne begrenzenden Seite des Sturkturbauteils 300 bis zu anderen Seite erstreckendes Versteifungsmittel 307 vorgesehen ist.

Allgemein kann die Versteifungs- und Verstärkungsleistung des Strukturbauteils 300 bei allen gezeigten Ausführungsformen durch geeignete Wahl und Auslegung der Versteifungsmittel 307 und Verstärkungsmittel 309 eingestellt werden. Dabei ist es denkbar, diese Mittel 307, 309 insbesondere als Verstärkungs- oder Versteifungsstege, -rippen oder -säulen unterschiedlicher Wandstärke bezogen auf die jeweiligen Spannungszonen des Gesamtbauteils 100 einzusetzen, wobei Zonen höherer Spannung mit dickeren Rippen, Säulen oder Stegen ausgestattet werden.

Insbesondere zum Einsatz kommende Säulen können generell hohle sein, die schräg oder senkrecht zur Längsachse der Schale 200 angeordnet sein können und auf einer geschlossenen oder offenen Kreis-, Ellipsoid- oder anderen nicht eckigen Kontur aufgebaut sein können. Säulen können zudem parallel zur Längsachse der Schale 200 angeordnet sein und dann als nach außen halboffene Röhre zur Verstärkung in axialer Richtung angebracht sein. Säulen in oder senkrecht zur Längsachse können ganz oder teilweise mit Strukturklebstoff oder -schaum gefüllt sein. Säulen können unterschiedliche Durchmesser aufweisen und so angeordnet sein, dass Berührungspunkte der Außenwände 202, 203 von jeweils vier runden Säulen ein Rechteck oder zwei Dreiecke bilden. Säulen können auch wie in Figur 3 gezeigt nicht berührend angeordnet sein, d.h. freistehen oder wie in Figur 4 gezeigt über Stege verbunden sein

Zudem kann angedacht sein, parallel zur Längsachse der Schale 200 auf den Flächen des Strukturbauteils 300, die mit Strukturmaterial 101 bedeckt sind, sind in Richtung der Längsachse der Schale 200 Rippen vorzusehen, die in das Strukturmaterial 101 eingebettet sind. Bei einer senkrechten Hauptrichtung des Krafteintrages in das Verbundbauteil 100 können diese Rippen senkrecht oder in einem anderen Winkel zur Längsachse diesen Winkeln folgend ausgerichtet sein. Insbesondere können Rippen oder Stege wellenförmig ausgebildet sein. Die Wandstärken insbesondere von Stegen, Säulen oder Rippen bewegen sich vorzugsweise im Bereich von 1 mm und 20 mm.

**Bezugszeichenliste:**

| | | | |
|---|---|---|---|
| 100 | Verbundbauteil | 300 | Strukturbauteil |
| 101 | Strukturmaterial | 301 | Wand |
| 200 | Schale | 302 | Öffnung |
| 201 | Raum | 303 | Raum |
| 202 | Erste Wand | 304 | erster Umgriff |
| 203 | Zweite Wand | 305 | zweiter Umgriff |
| 204 | Boden | 306 | Abdeckung |
| 205 | Stirnbereich | 307 | Versteifungsrippen |
| 206 | Erste freie Kante | 308 | Ausschnitt |
| 207 | Zweite freie Kante | 309 | Verstärkungsmittel |
| 208 | Erster Schenkel | | |
| 209 | Zweiter Schenkel | | |
| 210 | Dritter Schenkel | | |
| 211 | Hülse | | |
| 212 | Durchzug | | |
| 213 | Kagen | | |

## Patentansprüche

1. Verbundbauteil (100) mit einer einen Raum (201) zumindest bereichsweise umgrenzenden Schale (200) und mit einem Strukturbauteil (300) zur Verstärkung der Schale (200), wobei das Strukturbauteil (300) zumindest bereichsweise von einer den Raum (201) bestimmenden Wand (202, 203, 204) der Schale (200) beanstandet angeordnet ist, wobei zumindest bereichsweise ein Strukturmaterial (101) zwischen der Wand (202, 203, 204) der Schale (200) und dem Strukturbauteil (300) vorgesehen ist, wobei die Schale (200) zumindest eine freie Kante (206, 207) aufweist und wobei sich das Strukturbauteil (300) mindestens bereichsweise über die freie Kante (206, 207) der Schale (200) erstreckt, **dadurch gekennzeichnet, dass** sich das Strukturbauteil (300) umgreifend über die freie Kante (206, 207) der Schale (200) erstreckt, um diese zumindest bereichsweise vollständig abzudecken und dass der umgreifende Bereich des Strukturbauteils (300) zumindest bereichsweise beabstandet von der freien Kante (206, 207) angeordnet ist, wobei zumindest bereichsweise ein Strukturmaterial (101) zwischen dem Strukturbauteil (300) und der freien Kante (206, 207) vorgesehen ist.

2. Verbundbauteil (100) nach Anspruch 1, **dadurch gekennzeichnet, dass** zumindest eine den Raum (201) bestimmende Wand (202, 203) der Schale (200) die freie Kante (206, 207) aufweist

3. Verbundbauteil (100) nach einem der vorhergehenden Ansprüche, **dadurch gekennzeichnet, dass** eine zumindest bereichsweise rinnenförmige Schale (200) zum Einsatz kommt.

4. Verbundbauteil (100) nach Anspruch 3, **dadurch gekennzeichnet, dass** das Strukturbauteil (300) in seiner dem rinnenförmigen Teil der Schale (200) zugewandten Seite im Wesentlichen die gleiche rinnenförmige Form aufweist, wie der rinnenförmige Teil der Schale (200).

5. Verbundbauteil (100) nach Anspruch 4, **dadurch gekennzeichnet, dass** das Strukturbauteil (300) selbst einen zweiten rinnenförmigen Raum (303) umgrenzt, wobei Versteifungsmittel (307) vorgesehen sind, um die Schale (200) zu verstärken, wobei die Versteifungsmittel (307) in dem rinnenförmigen Raum (303) vorgesehen sind.

6. Verbundbauteil (100) nach Anspruch 3, **dadurch gekennzeichnet, dass** das Strukturbauteil (300) den Raum (201) der Schale (200) zumindest bereichsweise derart abdeckt, dass zwischen Strukturbauteil (300) und Schale (200) ein Hohlraum gebildet wird und dass zumindest ein Verstärkungsmittel (309) an dem Strukturbauteil (300) vorgesehen ist, das in den Hohlraum in Richtung der Schale (200) ragt

7. Verbundbauteil (100) nach Anspruch 6, **dadurch gekennzeichnet, dass** zumindest ein Strukturmaterial (101) vorgesehen ist, welches mit dem Verstärkungsmittel (309) in Kontakt ist.

8. Verbundbauteil (100) nach einem der vorhergehenden Ansprüche, **dadurch gekennzeichnet, dass** das Strukturbauteil (300) im Wesentlichen den gesamten den Raum (201) begrenzenden Teil der Schale (200) bedeckt, um einen Schutz vor Umwelteinflüssen für die Schale (200) bereitzustellen.

## Claims

1. A composite component (100) having a shell (200) at least locally peripherally delimiting a space (201), and having a structural component (300) to reinforce the shell (200), wherein the structural component (300) is arranged at least locally at a distance from a wall (202, 203, 204), determining the space (201), of the shell (200), where a structural material (101) is provided at least locally between the wall (202, 203, 204) of the shell (200) and the structural component (300),
wherein the shell (200) comprises at least one free edge (206, 207); and the structural component (300) extends at least locally over the free edge (206, 207) of the shell (200),
**characterized in that** the structural component (300) extends in wraparound fashion over the free edge (206, 207) of the shell (200) in order to completely cover it and **characterized in that** the wraparound region of the structural component (300) is arranged at least locally at a distance from the free edge (206, 207), wherein a structural material (101) is provided at least locally between the structural component (300) and the free edge (206, 207).

2. The composite component (100) according to Claim 1, **characterized in that** at least one wall (202, 203), determining the space (201), of the shell (200) comprises the free edge (206, 207).

3. The composite component (100) according to one of the preceding claims, **characterized in that** an at least locally trough-shaped shell (200) is used.

4. The composite component (100) according to Claim 3, **characterized in that** the structural component (300) has, in its side facing toward the trough-shaped part of the shell (200), substantially the same trough-like shape as the trough-shaped part of the shell (200).

5. The composite component (100) according to Claim 4, **characterized in that** the structural component (300) itself peripherally delimits a second trough-shaped space (303), wherein stiffening means (307) are provided in order to reinforce the shell (200), wherein the stiffening means (307) are provided in the trough-shaped space (303).

6. The composite component (100) according to Claim 3, **characterized in that** the structural component (300) covers the space (201) of the shell (200) at least locally in such a way that a cavity is formed between the structural component (300) and shell (200); and at least one reinforcing means (309), which projects into the cavity in the direction of the shell (200), is provided on the structural component (300).

7. The composite component (100) according to Claim 6, **characterized in that** at least one structural material (101) that is in contact with the reinforcing means (309) is provided.

8. The composite component (100) according to one of the preceding claims, **characterized in that** the structural component (300) covers substantially the entire part of the shell (200) delimiting the space (201), in order to supply protection from environmental influences for the shell (200).

## Revendications

1. Elément composite (100) comprenant une coque (200) délimitant au moins par endroits un espace (201), ainsi qu'un élément de structure (300) destiné à renforcer la coque (200), l'élément de structure (300) étant disposé au moins par endroits à une distance d'une paroi (202, 203, 204) de la coque (200) définissant l'espace (201), un matériau structural (101) étant prévu au moins par endroits entre la paroi (202, 203, 204) de la coque (200) et l'élément structural (300), la coque (200) présentant au moins un bord libre (206, 207) et l'élément structural (300) s'étendant au moins par endroits au-dessus du bord libre (206, 207) de la coque (200), **caractérisé en ce que** l'élément structural (300) s'étend au-dessus du bord libre (206, 207) de la coque (200) en l'enveloppant pour couvrir celle-ci totalement au moins par endroits, et **en ce que** la zone enveloppante de l'élément structural (300) est disposée au moins par endroits à une distance du bord libre (206, 207), un matériau structural (101) étant prévu au moins par endroits entre l'élément de structure (300) et le bord libre (206, 207).

2. Élément composite (100) selon la revendication 1, **caractérisé en ce qu'**au moins une paroi (202, 203) de la coque (200) définissant l'espace (201) présente le bord libre (206, 207).

3. Élément composite (100) selon l'une des revendications précédentes, **caractérisé en ce que** l'on utilise une coque (200) ayant au moins par endroits la forme d'une goulotte.

4. Élément composite (100) selon la revendication 3, **caractérisé en ce que** l'élément de structure (300) présente, sur son côté tourné vers la partie en forme de goulotte de la coque (200), essentiellement la même forme en goulotte que la partie en forme de goulotte de la coque (200).

5. Élément composite (100) selon la revendication 4, **caractérisé en ce que** l'élément de structure (300) délimite lui-même un second espace (303) en forme de goulotte, des moyens de raidissement (307) étant prévus pour renforcer la coque (200), les moyens de raidissement (307) étant prévus dans l'espace (303) en forme de goulotte.

6. Élément composite (100) selon la revendication 3, **caractérisé en ce que** l'élément de structure (300) couvre au moins par endroits l'espace (201) de la coque (200) de telle sorte qu'un espace creux est formé entre l'élément de structure (300) et la coque (200), et **en ce qu'**au moins un moyen de renforcement (309) avançant dans l'espace creux en direction de la coque (200) est prévu sur l'élément de structure (300).

7. Élément composite (100) selon la revendication 6, **caractérisé en ce qu'**il est prévu au moins un matériau structural (101) qui est en contact avec le moyen de renforcement (309).

8. Élément composite (100) selon l'une des revendications précédentes, **caractérisé en ce que** l'élément de structure (300) recouvre essentiellement toute la partie de la coque (200) délimitant l'espace (201) pour fournir à la coque (200) une protection contre les influences de l'environnement
